# EUROPÄISCHE PATENTANMELDUNG

(11) **EP 0 693 814 A1**
(43) Veröffentlichungstag der Anmeldung: **24.01.1996**
(21) Anmeldenummer: 95110988.3
(22) Anmeldetag: 13.07.1995
(51) Int. Cl.: H02J 7/00

(54) **Einrichtung zum Entladen bzw. Überwachen eines wiederaufladbaren Akkumulators**

(30) Priorität: 18.07.1994 AT 1404/94
(71) Anmelder: Pfaffelmoser, Peter, A-6671 Weissenbach (AT)
(72) Erfinder: Pfaffelmoser, Peter, A-6671 Weissenbach (AT)
(74) Vertreter: Torggler, Paul, Dr.

(57) **Zusammenfassung**

Einrichtung zum Entladen bzw. Überwachen eines wiederaufladbaren Akkumulators (3) mit zwei oder mehreren Zellen (2), wobei die Einrichtung (4,12,100,101) zum selektiven Entladen bzw. Überwachen der einzelnen Zellen (2) des Akkumulators (3) ausgebildet ist.

## Beschreibung

Die Erfindung betrifft eine Einrichtung zum Entladen bzw. Überwachen eines wiederaufladbaren Akkumulators mit zwei oder mehreren Zellen. Weiters betrifft die Erfindung ein Verfahren zum Betreiben eines solchen Akkumulators.

Es ist bereits bekannt, daß Akkumulatoren (insbesondere sogenannte Akkupack mit NiCd-Zellen, wie sie beispielsweise bei Videokameras zum Einsatz kommen) durch die laufenden Entlade- und Ladeprozesse an Ladekapazität verlieren. Weiters ist es bekannt, daß die Lebensdauer von Akkumulatoren insbesondere NiCd-Akkupack, verlängert werden kann, wenn diese vor dem Aufladen auf ein bestimmtes Spannungsniveau entladen werden. Es gibt daher bereits Entladegeräte, die an die normale Betriebsspannungkontakte des Akkus anschließbar sind und den Akkumulator beispielsweise wider einen definierten Widerstand entladen. Es hat sich aber gezeigt, daß auch damit die Lebensdauer der Akkumulatoren, das heißt die Zahl der möglichen Lade- bzw. Entladezyklen nicht zufriedenstellend erhöht werden kann.

Die Erfindung geht von der Erkenntnis aus, daß die Zellen eines Akkumulators mit Toleranzen behaftet sind, was in der Praxis bedeutet, daß in jedem Akkumulator überdurchschnittliche, durchschnittliche und leider auch unterdurchschnittliche Zellen enthalten sein können. Wenn man wie bisher die Entladung über die üblichen Betriebsspannungskontakte vornimmt, an denen (bei in Serie geschalteten Zellen) die Summe der Spannungen der einzelnen Zellen anliegt, so wird bei jedem Entladevorgang die schwächste Zelle etwas tiefer entladen und beim anschließenden Laden nicht voll geladen. Dieser Effekt schaukelt sich mit jedem Entlade-/Ladevorgang auf, bis die schlechte Zelle endlich defekt ist. Da aber bei mehreren Zellen die Stärke des Akkumulators vom schwächsten Glied bestimmt ist, wird damit die gesamte Funktionsfähigkeit des Akkumulators beeinträchtigt. Außerdem kann es vorkommen - je nachdem wo im Akkumulator der übliche Thermoschalter angebracht ist - daß die anfangs überdurchschnittlichen Zellen bei jedem Ladevorgang überladen werden und somit ebenfalls alsbald Schaden nehmen.

Wird mit dem Akkumulator ein Verbraucher betrieben, kann es aufgrund der Uneinheitlichkeit der einzelnen Zellen weiters vorkommen, daß die schwächsten Akku-Zellen tiefentladen und sogar umgepolt werden können, was zum Ausfall des gesamten Akkumulators führt.

Aufgabe der Erfindung ist es daher, eine Einrichtung zum Entladen eines wiederaufladbaren Akkumulators und zur Überwachung des Akkumulators während des Betriebes eines Verbrauchers zu schaffen, mit der es möglich ist, die Lebensdauer des Akkumulators bzw. die Zahl der Lade-/Entladevorgänge wesentlich zu erhöhen.

Dies wird gemäß der Erfindung dadurch gelöst, daß die Einrichtung zum selektiven Entladen bzw. Überwachen der einzelnen Zellen ausgebildet ist.

Mit der erfindungsgemäßen Idee der selektiven Entladung einzelner Zellen ist es nunmehr auch bei in der Praxis auftauchenden Qualitätsunterschieden einzelner Zellen möglich, alle Zellen durch die spezifische Entladung auf den vordefinierten Entladezustand zu bringen, wobei dann eben die Entladung für bestimmte Zellen bei gleichem Entladewiderstand etwas länger oder kürzer dauert als bei anderen Zellen. Nach dem Abschluß der Entladung der letzten Zelle weisen somit alle Zellen im wesentlichen denselben (niedrigen) Ladezustand auf und können von dort aus gemeinsam beispielsweise über ein herkömmliches Ladegerät wieder geladen werden.

Durch die selektive Überwachung der einzelnen Zellen während des Betriebs eines Verbrauchers kann der Stromfluß zum Verbraucher abgeschaltet werden, sobald die schwächste der Zellen die niedrigste zulässige Spannung erreicht hat.

Es ist möglich, die erfindungsgemäße Entladeeinrichtung als reine passive Entladeeinrichtung auszubilden, die eine der Zellenzahl des Akkumulators entsprechende Anzahl von unabhängigen Entladeeinheiten aufweist. Der Akkumulator wird dazu neben den üblichen Betriebsspannungskontakten noch weitere von außen zugängliche Kontakte aufweisen, an denen die Spannungen der einzelnen Zellen abgreifbar sind und über die die selektive Entladung der einzelnen Zellen durch die einzelnen Entladeeinheiten möglich ist.

Es ist aber auch möglich, die erfindungsgemäße Entladeeinrichtung mit einem (vorzugsweise handelsüblichen) Ladegerät zu kombinieren. Die erfindungsgemäße Einrichtung kann das Laden des Akkumulators so vornehmen, daß die Zellen zunächst über die Ladeeinrichtung für eine bestimmte Zeit aufgeladen werden, um die Zellen jedenfalls aus einem möglichen Tiefentladungszustand zu holen, daß die Zellen anschließend selektiv auf einen bestimmten Referenzspannungswert entladen werden und daß nach der Entladung der letzten Zelle automatisch auf Ladebetrieb über das Ladegerät umgeschaltet wird. Diese Ausführungsform hat für den Benutzer den Vorteil, daß er zwischen dem Entladen und Laden nichts tun muß, weil eben die Umschaltung Zwischen Entladen und Laden automatisch erfolgt.

Eine bevorzugte Ausführungsform der Erfindung besteht darin, daß in einer ersten Baueinheit eine Entladeeinrichtung und in einer zweiten Baueinheit ein Adapter bzw. Akkuwächter vorgesehen sind, wobei der Adapter erste elektrische Anschlüsse, die mit einem separaten Ladegerät bzw. einem Verbraucher verbindbar sind, zweite elektrische Anschlüsse, die mit den einzelnen Zellen des Akkumulators verbindbar sind, und dritte elektrische Anschlüsse, die mit der Entladeeinrichtung elektrisch verbindbar sind, aufweist.

Der Adapter überwacht dabei den Akkumulator während des Betriebes und steuert zusammen mit der Entladeeinrichtung das Aufladeverfahren des Akkumulators.

Weitere Vorteile und Einzelheiten der Erfindung werden anhand der nachfolgenden Figurenbeschreibung näher erläutert.

Es zeigt:
- Fig. 1: ein erstes Ausführungsbeispiel einer erfindungsgemäßen Entladeeinrichtung in schematischer Darstellung,
- Fig. 2: ein zweites Ausführungsbeispiel, das über einen Adapter mit einem herkömmlichen Ladegerät kombiniert ist,
- Fig. 3: ein schematisches Beispiel für eine Vergleichseinrichtung in einer Entladeeinheit,
- Fig. 4: ein Ausführungsbeispiel eines erfindungsgemäßen Akkumulators,
- Fig. 5a und 5b: die Schaltpläne eines bevorzugten Ausführungsbeispieles der Erfindung, bei dem der Adapter gleichzeitig die Funktion eines Akkuwächters hat.

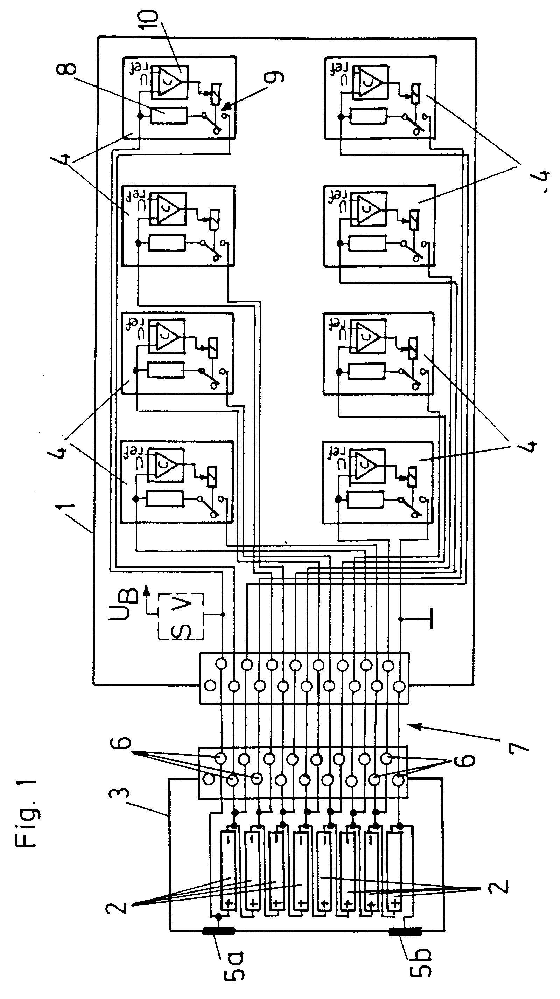

Die in Fig. 1 allgemein mit 1 bezeichnete Entladeeinrichtung dient dazu, die einzelnen acht Zellen 2 des Akkumulators 3 selektiv über eigene Entladeeinheiten 4 auf ein bestimmtes Spannungsniveau, beispielsweise 1,00 Volt zu entladen. Dazu weist der Akkumulator 3 neben den üblichen von außen zugänglichen Betriebsspannungskontakten 5a und 5b, an denen die Summe der Zellenspannungen abgreifbar ist, weitere von außen zugängliche Kontakte 6 auf, an denen die Spannung der einzelnen Zellen 2 abgreifbar ist. Pro Zelle sind zwei Kontakte vorgesehen, von denen der eine jeweils mit dem einen Pol der Zelle und der andere jeweils mit dem anderen Pol der Zelle verbunden ist. Bei der Zahl von acht Zellen sind somit sechzehn Anschlüsse 6 vorgesehen. Von diesen Anschlüssen führen jeweils einzelne Leitungen, also pro Zelle zwei Leitungen 7 zum Entladegerät. Beim dargestellten Ausführungsbeispiel erfolgt die mehrpolige Verbindung zwischen Akkumulator 3 und Entladegerät 1 über ein flexibles mehrpoliges Kabel, vorzugsweise ein Flachbandkabel. Aufgrund des in den Leitungen 7 auftretenden Spannungsabfalls ist es günstig, tatsächlich pro Zelle zwei Leitungen zum Entladegerät 1 zu führen, um eine unabhängige Entladung der einzelnen Zellen 2 über die jeweils zugeordnete Ladeeinheit 4 zu erzielen.

Jede der acht Entladeeinheiten ist im wesentlichen gleich aufgebaut und weist einen elektrischen Verbraucher 8 und in Serie dazu eine Schalteinheit 9 auf. Als Verbraucher kommen insbesondere definierte Widerstände infrage, die den Entladestrom festlegen. Bei geschlossener Schalteinheit 9 wird die jeweils zugeordnete Zelle 2 des Akkumulators durch die Entladeeinheit 4 entladen. Um eine Tiefentladung zu vermeiden ist eine Vergleichseinrichtung 10 vorgesehen, die die Zellenspannung mit einer Referenzspannung U_{ref} vergleicht. Wenn die Zellenspannung unter der Referenzspannung liegt, steuert die Vergleichseinrichtung 10 die vorzugsweise als Relais ausgebildete Schalteinheit 9 an und öffnet die Schalteinheit, womit der Entladestromfluß unterbrochen ist. Der Übersichtlichkeit halber nicht dargestellte optische Anzeigen können den Schaltzustand der Schalteinheiten anzeigen, damit der Benutzer sieht, welche Zellen bereits entladen sind und welche sich noch im Entladeprozeß befinden. Nachdem alle Schalteinheiten 9 geöffnet haben, ist der Entladevorgang insgesamt abgeschlossen und alle Zellen des Akkumulators 3 sind im wesentlichen auf dasselbe Spannungsniveau (bei Nickel-Cadmium-Akkumulatoren beispielsweise auf 1,00 Volt pro Zelle) entladen.

Bei den in Fig. 1 dargestellten Ausführungsbeispiel wird die Betriebsspannung U_{B} für die elektrischen Bauteile (insbesondere die Vergleichseinrichtung und die Schalteinheit 9) der Entladeeinheiten 4 vom zu entladenden Akkumulator 3 selbst zur Verfügung gestellt. Die Spannungs- bzw. Stromversorgungsleitung zu den einzelnen Entladeeinheiten 4 sind der Übersichtlichkeit halber nicht im Detail dargestellt. Falls die vom Akkumulator zur Verfügung gestellte Spannung für den Betrieb nicht ausreicht, könnte grundsätzlich ein Spannungsverfielfacher (in Fig.1 strichliert dargestellt) zwischengeschaltet werden.

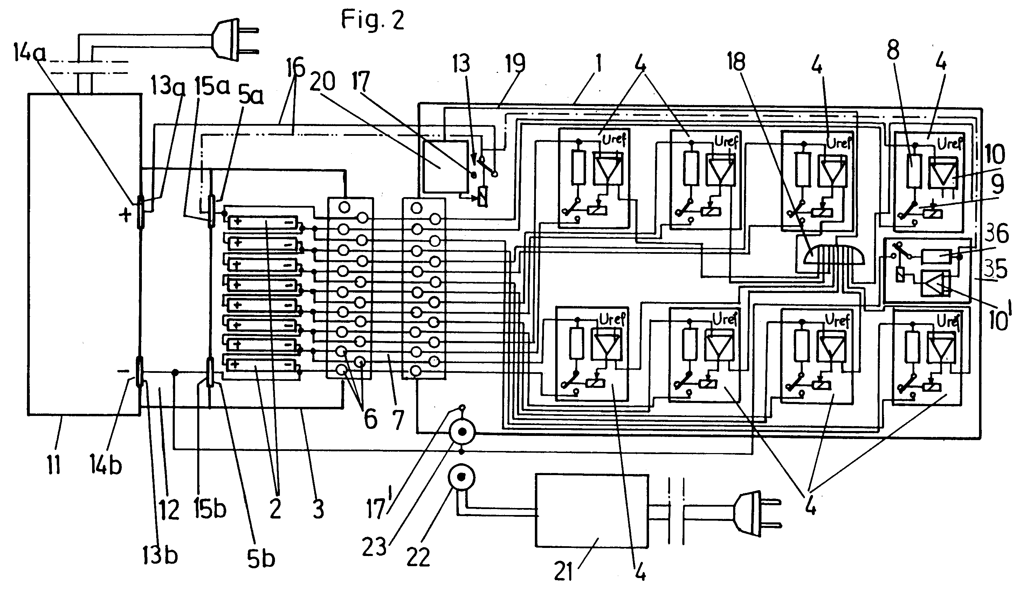

Bei dem in Fig. 2 dargestellten Ausführungsbeispiel ist die Entladeeinrichtung 1 zum Zusammenarbeiten mit einem handelsüblichen Ladegerät 11 ausgebildet und weist dazu über den im folgenden noch zu beschreibenden Adapter 12 einen Anschluß an das Ladegerät auf. Über eine Schalteinrichtung (Relais 13) im Entladegerät 1 kann das Ladegerät 11 zum Aufladen des Akkumulators 3, der auf der anderen Seite des Adapters 12 sitzt, mit diesem Akkumulator 3 elektrisch verbunden werden.

Der Adapter 12 ist als Zwischenplatte zwischen dem Ladegerät 11 und dem Akkumulator 3 ausgebildet. Er weist erste Anschlüsse 13a und 13b auf, die mit den Ladekontakten 14a und 14b des Ladegerätes 11 verbindbar sind. Außerdem weist der Adapter zweite elektrische Anschlüsse 15a und 15b auf, die mit den normalen Betriebsspannungskontakten 5a und 5b des Akkumulators verbindbar sind. Der Adapter 12 ist als Baueinheit ausgeführt, die neben den elektrischen Anschlüssen 13a und 13b und 15a und 15b nicht näher dargestellte mechanische Verbindungsmittel zur lösbaren Verbindung mit dem Ladegerät 11 einerseits und dem Akkumulator 3 andererseits aufweist.

Einer (13b) der beiden ersten Anschlüsse 13a und 13b des Adapters 12 ist ständig mit einem (15b) der beiden zweiten Anschlüsse 15a und 15b elektrisch verbunden (Minuspol). Vom jeweils anderen ersten und zweiten Anschluß 13a bzw. 15a führen Leitungen 16 zur Schalteinrichtung 13 in der Entladeeinrichtung. In der in Fig. 2 dargestellten Schaltstellung der Schalteinrichtung 13 sind die beiden Leitungen 16 miteinander verbunden und es erfolgt daher eine Ladung des Akkumulators 3 über das Ladegerät 11. Soll nun vor dem Laden ein deffiniertes Entladen der einzelnen Zellen 2 des Akkumulators 3 erfolgen, so wird beispielsweise über einen nicht dargestellten Tastschalter die Schalteinrichtung 13 umgeschaltet, sodaß die Ladegerätspannung (Pluspol) am Kontakt 17 zur Verfügung steht, der (der Übersichtlichkeit halber in nicht näher dargestellter Weise) die einzelnen Entladeeinheiten 4 mit Betriebsspannung versorgt. Wie schon beim Ausführungsbeispiel gemäß Fig. 1 sind nun die Entladeeinheiten so ausgebildet, daß sie über den Entladewiderstand 8 und die Schalteinheit 9 die jeweilige Zelle 2 solange entladen, bis die Zellenspannung unter der Referenzspannung U_{ref} liegt. Liegt die Zellenspannung unter der Referenzspannung U_{ref} öffent die Schalteinheit 9. Außerdem gibt jede Entladeeinheit an die logische Verknüpfungseinheit 18 ein Signal ab, das den Schaltzustand der Schalteinheit 9 der jeweiligen Entladeeinheit 4 wiedergibt. Solang eine oder mehrere der Entladeeinheiten aktiv ist, also die Schalteinheit 9 geschlossen ist und eine Entladung der entsprechenden Zelle erfolgt, steuert die logische Verknüpfungseinheit 18 über die Leitung 19 die Schalteinrichtung 13 so an, daß sie (in der in Fig. 2 nicht dargestellten Stellung) die Spannung des Ladegerätes 11 an dem Kontakt 17 anlegt, wobei gleichzeitig der Stromkreis in den Leitungen 16 unterbrochen ist, sodaß keine Ladung des Akkumulators 3 erfolgt. Erst wenn alle acht Entladeeinheiten 4 mit dem Entladen fertig sind, steuert die logische Verknüpfungseinheit 18 über die Leitung 19 die Schalteinheit 13 an, sodaß diese in die in Fig. 2 gezeigte Stellung geht und der Ladevorgang des Akkumulators über das handelsübliche Ladegerät 11 beginnt. Es ist also nach Beendigung des Entladevorganges nicht nötig, irgendwelche Schritte zu unternehmen. Vielmehr erfolgt die Umschaltung auf Ladebetrieb automatisch. Für einige Ladegerättypen ist es günstig, wenn nach der Entladung die Umschaltung auf Ladebetrieb nicht sofort, sondern nach einer vorbestimmten Verzögerungszeit erfolgt. Dazu ist die Verzögerungseinrichtung 20 vorgesehen.

Neben der in Fig. 1 gezeigten Stromversorgung der elektrischen Bauteile der Entladeeinheiten 4 über den zu entladenden Akkumulator 3 selbst und der in Fig. 2 bisher beschriebenen Stromversorgung über das Ladegerät 11 besteht auch noch die Möglichkeit, alternativ oder zusätzlich eine Stromversorgung über ein Netzgerät 21 mit Anschlußstecker 22 vorzunehmen, der in eine Anschlußbuchse 23 an der Entladeeinrichtung 1 einsteckbar ist. Die Versorgungsspannung steht dann am Anschluß 17' zur Verfügung und kann dann in nicht näher dargestellter Weise zu den einzelnen Entladeeinrichtungen 4 führen. Eine nicht dargestellte Schalteinrichtung kann dabei sicherstellen, daß die Stromversorgung nur entweder über das Ladegerät 11 oder über das eingesteckte Netzgerät 21 geschieht. Auch hier können gegebenenfalls Spannungsvervielfacher eingesetzt werden.

Bei dem in Fig. 2 dargestellten Ausführungsbeispiel ist auch noch ein Summenentlader 35 vorgesehen, der einen gekühlten Entladewiderstand 36 aufweist. Im Prinzip ist der Summenentlader ähnlich aufgebaut wie die einzelnen Entladeeinheiten 4. Lediglich der Widerstand 36 ist auf höhere Verlustleistung ausgelegt und deshalb vorteilhaft gekühlt. Außerdem ist die Vergleichsspannung der Vergleichseinrichtung 10' des Summenentladers 35 auf einen Wert eingestellt, der etwas höher ist als die Referenzspannung U_{ref} der Entladeeinheiten 4 multipliziert mit der Zellenzahl. Der Summenentlader 35 entlädt nicht die einzelnen Zellen 2 des Akkumulators, sondern die Gesamtheit der Zellen und ist daher an die üblichen Betriebsspannungskontakte 5a und 5b angeschlossen. Der Summenentlader kann über einen nicht dargestellten Tastschalter aktiviert werden, um beim Beginn der Entladung die Entladung zu beschleunigen. Die Schalteinheit im Summenentlader schaltet dann ab, sobald die gesamte Akkumulatorspannung unter die Referenzspannung der Vergleichseinrichtung 10' fällt. Von da an geht dann die zellenselektive Entladung über die Entladeeinheiten 4 weiter.

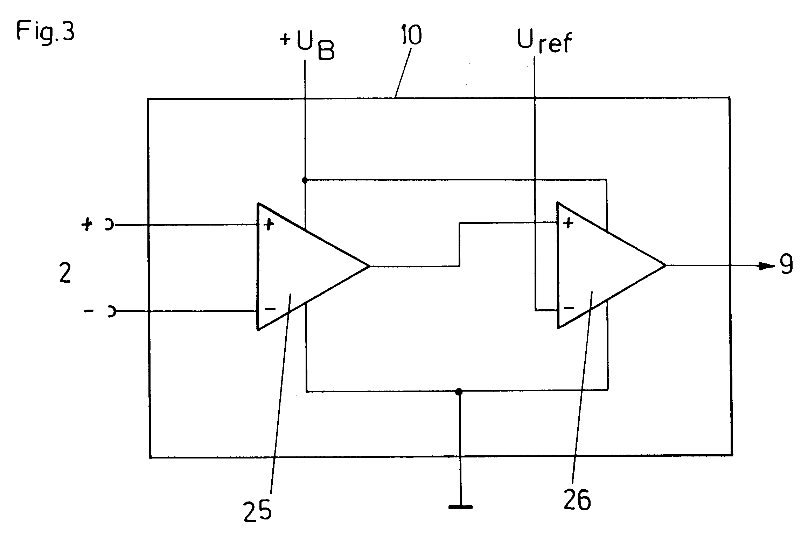

Die Fig. 3 zeigt ein Beispiel, wie die Vergleichseinrichtung 10 der Entladeeinheit 4 ausgebildet werden könnte. Die an den "+" und "-"-Eingängen des Differenzverstärkers 25 anliegenden Spannungen von einer Zelle 2 werden subtrahiert und das Resultat - bezogen auf Masse - wird dem nachgeschalteten Komparator zugeführt. Dieser vergleicht das Resultat mit einer Referenzspannung U_{ref} und gibt am Ausgang in Abhängigkeit vom Vergleichsergebnis verschiedene Spannungssignale ab, welche die Schalteinheit 9 steuern.

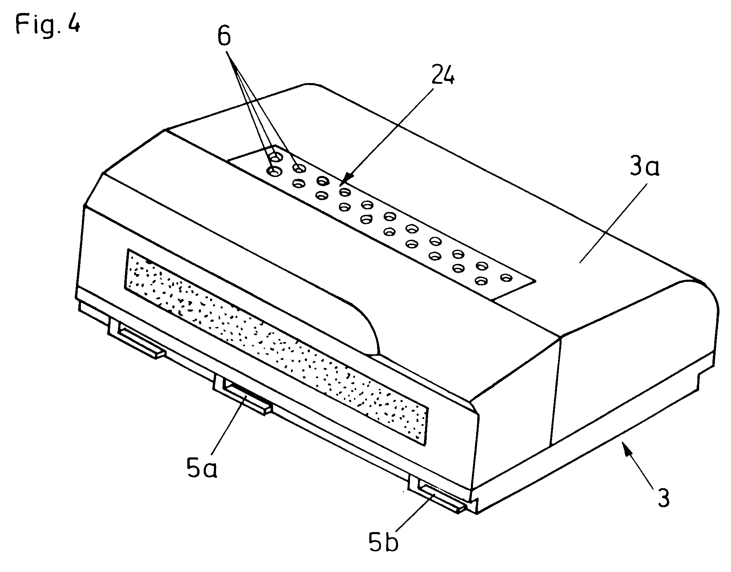

Die Fig. 4 zeigt ein Ausführungsbeispiel eines erfindungsgemäßen Akkumulators 3. Mit 5a und 5b sind die üblichen Betriebsspannungskontakte bezeichnet, an denen - bei in Serie geschalteten Zellen - die Summenspannung aller einzelnen Zellenspannungen von außen abgreifbar sind. Darüber hinaus weist der Akkumulator noch weitere Kontakte 6 auf, an denen die Spannungen der einzelnen Zellen im inneren des Akkumulatorgehäuses 3a von außen abgreifbar sind. Beim dargestellten Ausführungsbeispiel sind diese Kontakte 6 zu einer Buchsenleiste im Bereich der Wand des Gehäuses 3a des Akkumulators 3 zusammengefaßt. In dieser Buchsenleiste ist ein nicht dargestellter üblicher Mehrfachstecker einsteckbar, womit über ein mehrpoliges Kabel eine lösbare Verbindung zur Entladeeinrichtung 1 einfach hergestellt werden kann.

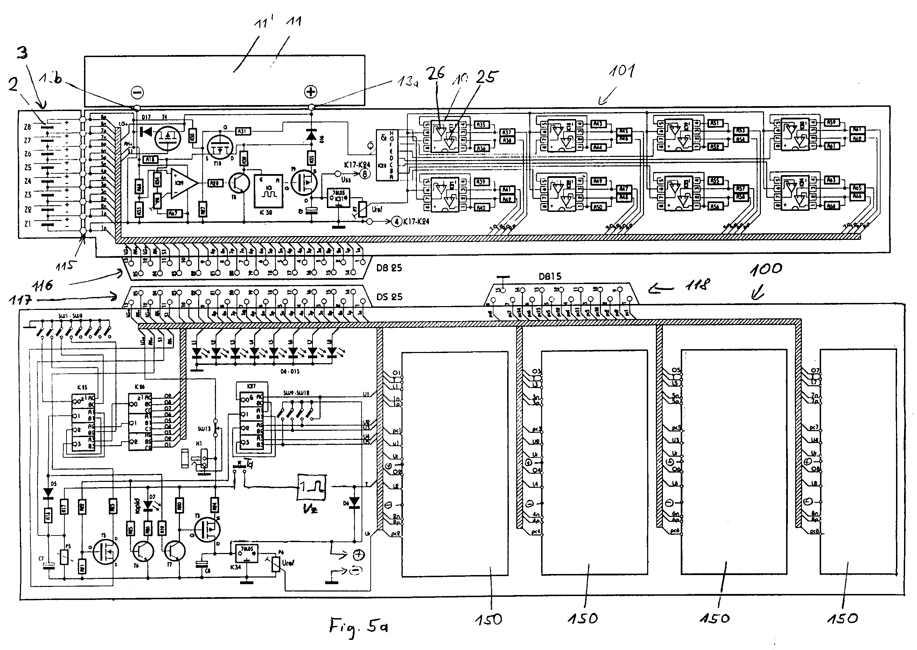

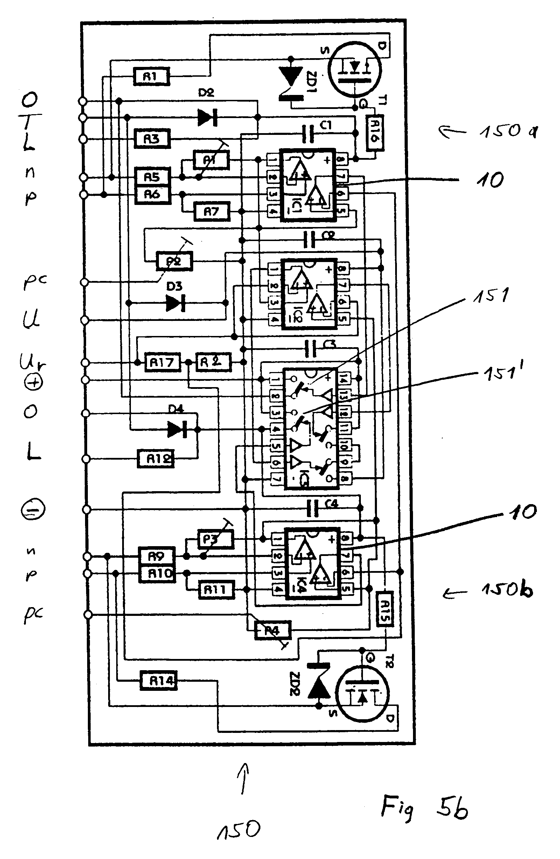

Ein bevorzugtes Ausführungsbeispiel der Erfindung ist in den Fig. 5a und 5b gezeigt. Die erfindungsgemäße Einrichtung umfaßt eine Entladeeinrichtung 100 und einen Adapter bzw. Akkuwächter 101. Der Adapter 101 weist erste Anschlüsse 13a, 13b, zweite Anschlüsse 115 und dritte Anschlüsse 116 auf. Die zweiten Anschlüsse 115 können mit den einzelnen Zellen 2 eines Akkumulators 3 verbunden werden. Zum Betrieb eines Verbrauchers 11' ist der Verbraucher 11' an die Anschlüsse 13a, 13b des Adapters 101 angeschlossen und der Adapter 101 übernimmt die Funktion eines Akkuwächters, der die Tiefentladung jeder einzelnen der Zellen 2 des Akkumulators 3 verhindert. Ist die nutzbare Kapazität des Akkumulators 3 erschöpft und soll dieser wiederum aufgeladen werden, so wird an die Anschlüsse 13a, 13b des Adapters 101 ein herkömmliches Ladegerät 11 angeschlossen und die Anschlüsse 116 des Adapters 101 werden mit den Anschlüssen 117 der Entladeeinrichtung 100 verbunden. Nach dem Einschalten des Ladegerätes 11 wird der Taster Ta betätigt, wodurch der erfindungsgemäße Prozeßablauf gestartet wird. Der Taster Ta startet ein Verzögerungsglied Vz, welches erst nach einer bestimmten Verzögerungszeit (z.B. 1 min) einen Impuls ausgibt. Während dieser Verzögerungszeit wird der Akkumulator 3 über den Transistor T4 geladen. Dies stellt sicher, daß sich zu Beginn des nachfolgenden Entladevorgangs keine der Zellen 2 des Akkumulators 3 in einem Tiefentladungszustand, beispielsweise infolge längerer Lagerung des Akkumulators, befindet. Würde eine Zelle 2, die sich im Tiefentladezustand befindet, auch nur kurze Zeit weiter entladen, so hätte dies schädliche Auswirkungen auf diese Zelle 2.

Wenn das Verzögerungsglied Vz nach der Verzögerungszeit von beispielsweise einer Minute den Impuls ausgibt, wird durch diesen Impuls der Ladeprozeß durch Sperren des Transistors T4 über die Steuerleitung S1 gestoppt, die Spannungsversorgung der Entladeeinrichtung 100 durch Aufsteuerung des Transistors T3 eingeschaltet und die selektive Entladung der einzelnen Zellen 2 begonnen. Für die selektive Entladung von jeweils zwei Zellen 2 ist jeweils eines der Doppelmodule 150 zuständig, welches zwei den Entladeeinheiten 4 der Fig. 1 und Fig. 2 ähnliche Entladeeinheiten 150a und 150b aufweist. Der Schaltplan eines Doppelmoduls 150 ist in Fig. 4b dargestellt. Die Entladeeinheit 150a enthält dabei die Widerstände R1, R5, R6, R7, R16 und P1, den Transistor T1 zur Ausbildung einer Entladestrom-Schalteinrichtung, die Zenerdiode ZD1, den integrierten Schaltkreis 1C1 zur Ausbildung einer Vergleichseinrichtung 10 und die den Anschlüssen 13, 1, 2 des IC3 zugeordnete Entladebeendigungs-Schalteinrichtung 151.

Die Entladeeinheit 150b enthält die entsprechenden Bauteile. Zusätzlich sind im Doppelmodul 150 noch Bauteile zur Realisierung einer weiter unten beschriebenen Summenentladung und einige dem Fachmann in ihrer Funktion ohne weiteres verständliche Hilfsbauteile enthalten. Dem Eingang T des Doppelmoduls 150 wird der Ausgangsimpuls der Verzögerungsstufe Vz zugeführt, wodurch die Spannungsversorgungen der IC's eingeschaltet werden und der Entladeprozeß beginnt. Die positiven und negativen Pole der jeweiligen Zelle 2 sind mit den Eingängen p und n des Doppelmoduls 150 verbunden und werden über die Eingänge 2 und 3 des IC1 bzw. IC4 einem Differenzverstärker zugeführt. Dessen Ausgangssignal wird an den Eingang 5 des IC1 bzw. IC4 geleitet und von einem Komparator mit der Referenzspannung U_{Ref} verglichen, welche dem Eingang Uᵣ und weiter dem Eingang 6 des IC1 bzw. IC4 zugeführt wird. Die Zelle 2 wird über den Transistor T1 bzw. T2 und den Widerstand R1 bzw. R14 solange entladen bis sie unter die Referenzspannung abfällt. In diesem Moment wird über den Eingang 13 bzw. 5 des IC3 die Entladebeendigungs-Schalteinheit 151 bzw. 151' geöffnet, sodaß das Ausgangssignal im Ausgang O von "high" auf "low" absinkt, die entsprechende Leuchtdiode L1-L8 verlischt, die Spannungsversorgung zum Eingang 8 des IC1 bzw. IC4 abgeschaltet wird und der Transistor T1 bzw. T2 gesperrt wird. Durch die Beendigung der Entladung steigt die Spannung der Zelle 2 wiederum an, trotzdem wird infolge der Abschaltung der Spannungsversorgung des IC1 bzw. IC4 die Zelle 2 nicht neuerlich entladen, sondern der Transistor T1 bzw. T2 bleibt gesperrt. Durch diese Ausgestaltung der Schaltung können alle Zellen 2 in kürzest möglicher Zeit auf das gleiche Spannungsniveau entladen werden und ein völlig hysteresefreies Verhalten der Schaltung wird erreicht. Sobald alle der Zellen 2 auf den vorgegebenen Spannungswert entladen sind, d.h. der Entladevorgang beendet ist, sind alle Eingänge der ODER-Glieder IC25 und IC26 auf "low" und der Ausgang Q2 des IC25 geht auf "low", wodurch der Transistor T4 über die Steuerleitung Sl aufgesteuert wird und die Aufladung des Akkumulators 3 über das Ladegerät 11 beginnt.

Ein Vorteil der aktiven Messung der an jeder der Zellen 2 anliegenden Spannung mit einem Differenzverstärker besteht neben der Einfachheit und dem geringen Stromverbrauch der gesamten Schaltung in der Möglichkeit der Kompensation von Unterschieden in der Leitungslänge.

Um die Entladung des Akkumulators 3 weiter zu beschleunigen, ist eine Summenentladung über den Widerstand R23, welche durch den Transistor T5 ein- bzw. ausgeschaltet wird, vorgesehen. Durch die Summenentladung werden alle Zellen 2 gemeinsam entladen. Um trotzdem sicherzugehen, daß keine der Zellen 2 tiefentladen wird, wird die Summenentladung abgeschaltet, sobald die erste der Zellen 2 eine Summenentladungs-Referenzspannung U_{Ref2} erreicht, welche geringfügig oberhalb der Referenzspannung U_{Ref} für die Einzelentladung liegt. Zur Festlegung dieses Spannungswertes U_{Ref2} ist im Doppelmodul 150 der Spannungsteiler R17/R2 vorgesehen und zum Vergleich der jeweiligen Zellspannung mit diesem Spannungswert U_{Ref2} sind für die jeweils zwei mit einem Doppelmodul 150 verbundenen Zellen 2 die beiden Komparatoren des IC2 vorgesehen. Sobald eine der Zellen 2 unter den Spannungswert U_{Ref2} absinkt, wird über das dem Eingang 6 bzw. 12 des IC3 zugeführte Ausgangssignal des Komparators der entsprechende Schalter geöffnet, wodurch die Versorgungsspannung des IC2 ausgeschaltet und der Ausgang U des Doppelmoduls 150 sinkt von "high" auf "low" absinkt. Dieses Signal U ist einem der Eingänge des UND-Gliedes IC27 zugeführt, wodurch der Ausgang Q1 des IC27 von "high" auf "low" abfällt und die Schnellentladung durch Sperren des Transistors T5 beendet wird. Die Zellen 2 werden in der Folge über die Einzel-Entladeeinheiten 150a, 150b selektiv weiterentladen, bis alle Zellen die vorgegebene Referenzspannung U_{Ref} erreicht haben, wonach die Aufladung des Akkumulators 3 über das Ladegerät 11 erfolgt.

Die Entladung der Zellen 2 des Akkumulators 3 kann über die Ausgänge 118 der Entladeeinrichtung 100 von einem Computer aufgezeichnet werden. Die Spannungsversorgung der Entladeeinrichtung 100 erfolgt normalerweise aus dem Ladegerät 11, es kann aber auch eine Spannungsversorgung in den externen Anschluß K1 eingesteckt werden.

Auch beim Betrieb eines Verbrauchers 11' durch den Akkumulator 3 kann die Idee der selektiven Überwachung der Entladung der einzelnen Zellen 2 des Akkumulators angewendet werden. Dazu ist der Adapter 101 während des Betriebes des Verbrauchers 11' zwischen Akkumulator 3 und Verbraucher 11' zwischengeschaltet. Da die Entladeeinrichtung 100 nicht an den Adapter 101 angeschlossen ist, bleibt die Steuerleitung S1 offen und der Transistor T4 gesperrt. Zur selektiven Überwachung der einzelnen Zellen 2 des Akkumulators 2 sind die durch die IC17 - IC24 realisierten Vergleichseinrichtungen 10 vorgesehen, welche wiederum für jede der Zellen einen Differenzverstärker 25 und einen Komparator 26 zum Vergleich mit einer Referenzspannung U_{Ref} enthalten. Sobald eine der Zellen 2 unter die Referenzspannung abgesunken ist, wechselt der Ausgang des entsprechenden Komparators 26 seinen Zustand, wodurch der Ausgang Q des invertierenden UND-Gliedes IC28 seinen Zustand wechselt und der Transistor T10 gesperrt wird. Damit wird der Verbraucher 11' abgeschaltet und die Entladung des Akkumulators 3 über den Verbraucher 11' beendet, sodaß eine Tiefentladung oder sogar Polaritätsumkehr einer oder mehrerer Zellen 2 des Akkumulators 3 zuverlässig verhindert wird.

Um die Belastung des Akkumulators 3 durch den als Akkuwächter arbeitenden Adapter 101 möglichst niedrig zu halten, ist als Stromsensor ein Widerstand R18 mit einem geringen Widerstandswert vorgesehen. Wenn kein Verbraucher 11' angeschlossen bzw. eingeschaltet ist, bleibt die Versorgungssspannung der Entladeeinheiten 10 abgeschaltet. Bei eingeschaltetem Verbraucher 11' reicht der minimale Spannungsabfall am R18 aus, um den als Komparator geschalteten LinCMos IC29 zum Kippen zu bringen und so die Betriebsspannung mittels der Transistoren T8, T9 einzuschalten. Für den IC29 wird dabei ein extrem stromsparender Operationsverstärker verwendet, welcher den Akkumulator 3 mit nur ca. 10µA äußerst gering belastet, sodaß die Belastung des Akkumulators durch den Adapter 101 im Vergleich zur Selbstentladung des Akkumulators 3 vernachlässigbar ist.

Zur weiteren Verringerung des Stromverbrauches des Adapters 101 während des Betriebes eines Verbrauchers 11' ist der IC32 vorgesehen, der die Betriebsspannung der Differenzverstärker und Komparatoren pulst, wodurch der Stromverbrauch in Abhängigkeit vom eingestellten Tastverhältnis um ca. 90% reduziert werden kann. Die gespeicherte Energie des Akkumulators 3 steht damit fast zur Gänze dem eigentlichen Verbraucher 11' zur Verfügung.

Weitere Einzelheiten der Schaltung sind für den Fachmann aus dem Schaltplan ersichtlich und werden an dieser Stelle nicht explizit beschrieben.

Die Erfindung ist nicht auf die dargestellten Ausführungsbeispiele beschränkt, selbstverständlich eignet sich die Erfindung auch bei einer anderen Zellenzahl als acht. Das Ausführungsbeispiel nach den Fig. 5a und 5b kann über die Schalter SW1-SW12 der Entladeeinrichtung 100 an eine geringe Zellenzahl als echt problemlos angepaßt werden. Es können aber genausogut mehr als acht Zellen vorgesehen sein. Auch andere Akkumulatortypen wie Nickel-Cadmium-Akkumulatoren können grundsätzlich mit der erfindungsgemäßen Entladeeinrichtung zellenselektiv entladen bzw. überwacht werden.

Es ist auch möglich, einzelne Zellen parallel zu schalten oder Gruppen von in Serie geschalteten Zellen untereinander parallel zu schalten. Je nach Zellenspannungsart und Zusammenschaltungsart ergibt sich dann die an den Betriebsspannungskontakten abgreifbare Gesamtspannung.

## Patentansprüche

1. Einrichtung zum Entladen bzw. Überwachen eines wiederaufladbaren Akkumulators (3) mit zwei oder mehreren Zellen (2), dadurch gekennzeichnet, daß die Einrichtung (4,12,100,101) zum selektiven Entladen bzw. Überwachen der einzelnen Zellen (2) des Akkumulators (3) ausgebildet ist.

2. Einrichtung nach Anspruch 1, dadurch gekennzeichnet, daß zum selektiven Entladen bzw. Überwachen der einzelnen Zellen (2) zumindest eine Vergleichseinrichtung (10) zum Vergleich der an den Zellen (2) anliegenden Spannungen mit einer Referenzspannung (U_{Ref}) vorgesehen ist, wobei jede der Vergleichseinrichtungen (10) einen Differenzverstärker (25), an dessen beiden Differenzeingängen die beiden Spannungspole der zu vergleichenden Zelle (2) anliegen, und einen Komparator (26) zum Vergleichen der vom Differenzverstärker (25) ausgegebenen Spannung mit der Referenzspannung (U_{Ref}) aufweist.

3. Einrichtung nach Anspruch 1 oder 2, dadurch gekennzeichnet, daß zum selektiven Entladen der einzelnen Zellen (2) des Akkumulators (3) für jede Zelle (2) eine eigene Entladeeinheit (4,150a,150b) vorgesehen ist, welche eine Entladestrom-Schalteinrichtung (9,T1,T2) zum Unterbrechen des Entladestroms aufweist und daß jede der Entladeeinheiten (4,150a,150b) eine eigene Vergleichseinrichtung (10) zum Vergleich der an der jeweiligen Zelle (2) anliegenden Spannung mit einer Referenzspannung (U_{Ref}) aufweist, welche jeweils die Entladestrom-Schalteinrichtung (9,T1,T2) der Entladeeinheit (4,150a,150b) steuert.

4. Einrichtung nach einem der Ansprüche 1 bis 3, dadurch gekennzeichnet, daß zum selektiven Entladen der einzelnen Zellen (2) des Akkumulators (3) für jede Zelle (2) eine eigene Entladeeinheit (150a,150b) vorgesehen ist, welche eine Entladestrom-Schalteinrichtung (T1,T2) zum Unterbrechen des Entladestroms aufweist und daß für jede der Entladeeinheiten (150a,150b) eine Entladebeendigungs-Schalteinrichtung (151,151') vorgesehen ist, durch welche beim Absinken der Zelle (2) unten die Referenzspannung (U_{Ref}) die Spannungsversorgung der Vergleichseinrichtung (10) abgeschaltet wird, sodaß auch bei einem durch das öffnen der Entladestrom-Schalteinrichtung (T1,T2) bedingten Wiederanstieg der an der Zelle (2) anliegenden Spannung über die Referenzspannung (U_{Ref}) die Entladestrom-Schalteinrichtung (T1,T2) geöffnet bleibt.

5. Einrichtung nach einem der Ansprüche 1 bis 4, gekennzeichnet durch einen externen Anschluß (13a,13b) für ein separates Ladegerät (11) und eine Ladestrom-Schalteinrichtung (13,T4), über die das an den externen Anschluß anschließbare Ladegerät (11) zum Aufladen des Akkumulators (3) mit diesem verbindbar ist.

6. Einrichtung nach Anspruch 5, dadurch gekennzeichnet, daß die Ladestrom-Schalteinrichtung (13,T4) in Abhängigkeit vom Schaltzustand der einzelnen Entladeeinheiten (4,150a,150b) gesteuert ist, wobei nach Abschluß der Entladung aller Zellen (2) die Ladestrom-Schalteinrichtung (13,T4) automatisch das Ladegerät (11) auf den Akkumulator (3) schaltet.

7. Einrichtung nach einem der Ansprüche 1 bis 6, dadurch gekennzeichnet, daß in einer ersten Baueinheit eine Entladeeinrichtung (100) und in einer zweiten Baueinheit ein Adapter bzw. Akkuwächter (101) vorgesehen sind, wobei der Adapter (101) erste elektrische Anschlüsse (13a,13b), die mit einem separaten Ladegerät (11) bzw. einem Verbraucher (11') verbindbar sind, zweite elektrische Anschlüsse (115), die mit den einzelnen Zellen (2) des Akkumulators (3) verbindbar sind, und dritte elektrische Anschlüsse (116), die mit der Entladeeinrichtung (100) elektrisch verbindbar sind, aufweist.

8. Einrichtung nach Anspruch 7, dadurch gekennzeichnet, daß der Adapter (101) neben den elektrischen Anschlüssen (13a,13b,115,116) mechanische Verbindungsmittel zur lösbaren Verbindung mit dem Ladegerät (11) bzw. angeschlossenen Verbraucher (11') einerseits und dem Akkumulator (3) andererseits aufweist.

9. Einrichtung nach Anspruch 8, dadurch gekennzeichnet, daß der Adapter (101) im elektrisch und mechanisch mit dem Ladegerät (11) bzw. Verbraucher (11') und dem Akkumulator (3) verbundenen Zustand zwischen Ladegerät (11) bzw. Verbraucher (11') und Akkumulator (3) liegt.

10. Einrichtung nach einem der Ansprüche 7 bis 9, dadurch gekennzeichnet, daß im Adapter (101) ein Stromsensor (R18) zur Feststellung eines Entladestromes über einen angeschlossenen Verbraucher (11') vorgesehen ist, wobei zur Verringerung des Energieverbrauches des Adapters (101) die Vergleichseinrichtungen (10) des Adapters nur mit Spannung versorgt wird, wenn ein Stromfluß durch einen Verbraucher (11') detektiert wird.

11. Einrichtung nach einem der Ansprüche 7 bis 10, dadurch gekennzeichnet, daß die Spannungsversorgung der Vergleichseinrichtungen (10) des Adapters über eine Pulsereinrichtung (IC32) gepulst wird.

12. Einrichtung nach einem der Ansprüche 1 bis 11, dadurch gekennzeichnet, daß die Entladeeinrichtung (100) zusätzlich einen Summenentladewiderstand (R23) aufweist, der über eine Summenentlade-Schalteinrichtung (T5) mit den beiden Betriebsspannungskontakten (5a,5b) des Akkumulators (3) verbindbar ist und über den alle in Serie geschalteten Zellen (2) gemeinsam entladbar sind.

13. Einrichtung nach Anspruch 12, dadurch gekennzeichnet, daß die Summenentlade-Schalteinrichtung (T5) die Summenentladung unterbricht, wenn die an einer der Zellen (2) anliegende Spannung unter einer vorgegebenen Summenentladungs-Referenzspannung (U_{Ref2}) liegt, welche, vorzugsweise geringfügig, oberhalb der Referenzspannung (U_{Ref}) für die selektive Entladung der einzelnen Zellen (2) liegt.

14. Einrichtung nach Anspruch 12 oder 13, dadurch gekennzeichnet, daß zur Summenentladung für jede der Zellen (2) ein Komparator (IC2) zum Vergleich der an der jeweiligen Zelle (2) anliegenden Spannung mit der Summenentladungs-Referenzspannung (U_{Ref2}) vorgesehen ist.

15. Einrichtung nach einem der Ansprüche 1 bis 14, gekennzeichnet durch ein Verzögerungsglied (Vz) zur Verzögerung des Beginns der selektiven Entladung der einzelnen Zellen (2) um eine vorgegebene Zeit, während der der Akkumulator (3) vom angeschlossenen Ladegerät (11) geladen wird.

16. Verfahren zum Betreiben eines wiederaufladbaren Akkumulators (3) mit zwei oder mehreren Zellen (2), dadurch gekennzeichnet, daß die Zellen (2) vor dem Aufladen des Akkumulators (3) selektiv entladen und/oder während des Betriebes eines Verbrauchers (11') selektiv überwacht werden.

17. Verfahren nach Anspruch 16, dadurch gekennzeichnet, daß zum Aufladen des Akkumulators (3) die Zellen (2) in einem ersten Schritt gemeinsam für eine vorgegebene Zeit geladen werden, wobei die Zellen (2) aus einem möglichen Tiefentladungszustand geholt werden, daß in einem zweiten Schritt jede der Zellen (2) selektiv auf eine vorgegebene Referenzspannung (U_{Ref}) entladen wird und daß die Zellen (2) nach der einzelnen Entladung auf die vorgegebene Referenzspannung (U_{Ref}) in einem dritten Schritt von einem Ladegerät gemeinsam geladen werden.

18. Verfahren nach Anspruch 16, dadurch gekennzeichnet, daß im zweiten Schritt die Entladung jeder der Zellen (2) beendet wird, sobald die jeweilige Zelle (2) beim Entladen die vorgegebene Referenzspannung (U_{Ref}) erreicht hat, und daß in der weiteren Folge des Verfahrens die Entladung trotz des durch das Wegschalten der Belastung bedingten Wiederanstieges der an der Zelle (2) anliegenden Spannung auf einen Wert oberhalb der Referenzspannung (U_{Ref}) beendet bleibt.
